# EUROPEAN PATENT APPLICATION

(11) **EP 1 250 014 A2**
(43) Date of publication of application: **16.10.2002**
(21) Application number: 02007320.1
(22) Date of filing: 04.04.2002
(51) Int. Cl.: H04Q 3/00

(54) **System and Method for Lifeline backup in communication networks**

(30) Priority: 11.04.2001 US 832643
(71) Applicant: Ericsson Inc., Research Triangle Park, N.C. 27709 (US)
(72) Inventor: Schmidt, Paul E., Forest, Virginia 24551 (US); Risseeuw, Frank, Lynchburg, Virginia 24502 (US); Rapiejko, Stephen, Lynchburg, Virginia 24503 (US)
(74) Representative: HOFFMANN - EITLE

(57) **Abstract**

A secondary cellular backup device provides a secondary communication path to a cellular network for customer premise equipment (CPE) in case a primary broadband communication path is disrupted. A secondary device consistent with the invention may be connected directly to an existing household communication network such as telephone wiring or a cellular network to share the existing network with CPE. As such, the secondary device may be connected in parallel with other devices sharing a telephone wiring communication network. A method of connecting a secondary backup device for providing lifeline backup services and a method for switching between a primary broadband communication path and a secondary communication path is also provided.

## Description

### BACKGROUND OF THE INVENTION

The present invention relates to a system and method for connecting a wireless backup device to an existing phone network to provide lifeline backup service in the event of a malfunction in primary voice service.

Broadband technologies such as Digital Subscriber Line (DSL), cable modems, and wireless point-to-point networks have been developed with the primary focus of satisfying increasing customer demands for high-speed Internet access. Broadband service providers are, however, beginning to offer other services, such as Voice-over-Broadband (VoB), to provide a local telephone type service. VoB has the potential to offer many attractive features to both consumers and service providers. For example, VoB may inherently reduce the effort and expense associated with deploying multiple voice lines at a single home since the additional voice lines are delivered over the same cable or wire carrying the initial voice line and other data services. Accordingly, VoB is increasingly viewed as a potential replacement for the conventional Plain Old Telephone Service (POTS).

One important feature that POTS offers is residential lifeline service. Lifeline service is the ability to offer line-powered dial tone when a power failure occurs at a customer's residence. The phone will thus continue to operate, despite the power failure, and provide a "lifeline" to the outside world. Provision of a viable lifeline service in a VoB system is generally viewed as a key element in mass deployment of VoB.

### BRIEF SUMMARY OF THE INVENTION

A communication system consistent with the invention includes a primary service gateway in communication with customer premise equipment (CPE) through a customer premises network. The gateway is configured to establish communication between the CPE and a public service telephone network (PSTN) through a broadband network. The communication system further includes a secondary device in communication with the CPE also through the customer premises network. The secondary device is configured to establish communication between the CPE and the PSTN through a wireless communication network when connectivity between the CPE and the PSTN is disrupted.

A method of connecting the secondary device for providing lifeline backup services consistent with the invention includes placing the secondary device in communication with the CPE through the customer premises network for establishing communication between the CPE and the PSTN through a wireless communication network when connectivity between the CPE and the PSTN through the broadband network is disrupted. A method of switching between the primary service gateway and the secondary device includes: monitoring a connectivity status between the PSTN and the CPE through the broadband network, providing a first notification signal to the secondary device through the customer premises network shared with the primary device when connectivity between the PSTN and the CPE through the broadband network is disrupted, and enabling the secondary device for establishing communication between the PSTN and the CPE in response to the first notification signal.

### BRIEF DESCRIPTION OF THE DRAWINGS

Advantages of the present invention will be apparent from the following detailed description of exemplary embodiments thereof, which description should be considered in conjunction with the accompanying drawings, in which:
FIG. 1 is a block diagram of an exemplary system consistent with the invention including a primary service gateway and a secondary device connected via a wired customer premises network;
FIG. 2 is a block diagram of another exemplary system consistent with the invention including a primary service gateway and a secondary device connected via a wireless network consistent with the present invention; and
FIG. 3 is a flowchart illustrating operation of an exemplary system consistent with the present invention.

### DETAILED DESCRIPTION OF THE INVENTION

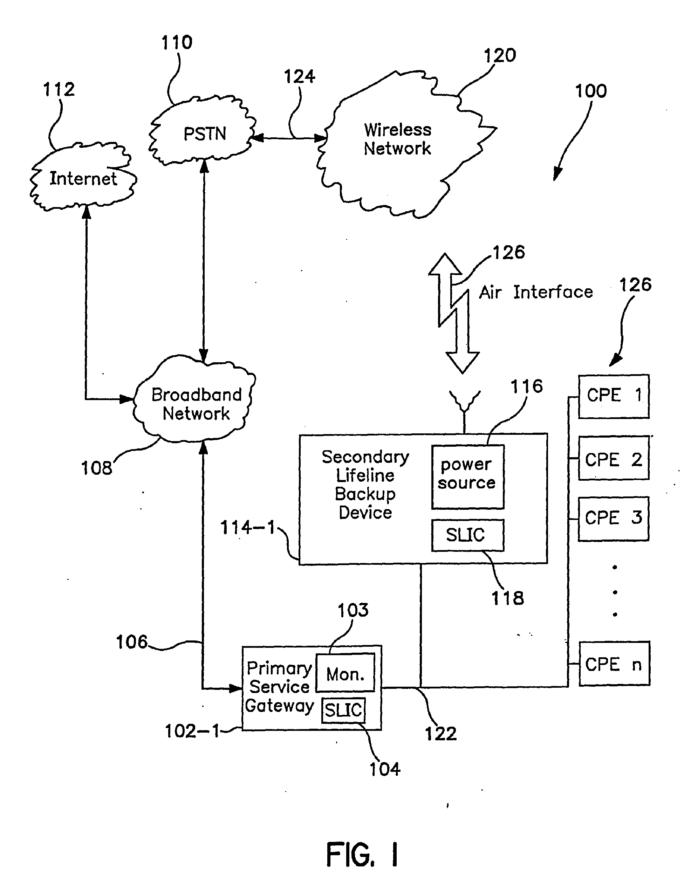

Various features of the present invention will be described in connection with particular embodiments illustrated in FIGS. 1-3. Those skilled in the art will recognize that the various modifications may be made to the illustrated embodiments without departing from the present invention. It is to be understood, therefore, that the illustrated embodiments are provided by way of explanation, not of limitation.

Turning nows to FIG. 1, there is shown an exemplary embodiment 100 of a system consistent the present invention. As shown, a voice enabled primary service gateway 102-1 may be provided on customer premises, e.g. at a household or business, The gateway. 102-1 facilitates communication between customer premises equipment (CPE) 126, such as CPE 1, CPE 2, CPE 3, ..., CPE n, and a public service telephone network (PSTN) via a broadband network 108. A CPE 126 may include any wired communication device such as a telephone, personal computer, laptop computer, facsimile machine, a PDA, a Web TV device, etc. The gateway may also facilitate communication between the CPE and other networks, such as the Internet 112, through the broadband network 108.

Those skilled in the art will recognize that the configuration of the voice enabled primary service gateway 102-1 depends on the nature of the broadband network 108. For example, a cable modem may be utilized in a cable broadband network, and a DSL modem may be utilized in a DSL broadband network. Also, connection between the gateway 102-1 and the broadband network 108 may be established via a communication medium 106, the nature of which may vary depending on the type of broadband application. In an embodiment where the broadband network 108 is a cable broadband network, the communication medium 106 may be hybrid fiber coax cable or cable network.

For simplicity and ease of explanation, some elements that may exist between the primary service gateway 102-1 and the PSTN 110 and the Internet 112 have been omitted from FIG. 1. Those skilled in the art will appreciate these additional elements may include a cable modem termination system (CMTS) for cable broadband, or a digital subscriber line access multiplexer (DSLAM) for DSL broadband located between the primary service gateway 102-1 and the broadband network 108. There may also be an Internet service provider or data center located between the broadband network 108 and the Internet 112. In addition, there may also be a voice gateway located between the broadband network 108 and the PSTN 110.

In the illustrated embodiment, the gateway 102-1 includes a subscriber line interface circuit (SLIC) 104. The SLIC 104 may perform conventional line supervision functions, and may be in the form of an integrated circuit contained within the primary service gateway 102-1. The SLIC may also provide tip/ring voltage to the customer premise network via the tip and ring wires in a typical twisted pair cable.

The primary service gateway 102-1 may also be equipped with a connectivity monitor (CM) 103 for determining when connectivity to its access point at the public service telephone network (PSTN) 110 is lost. The connectivity monitor may be internal or external to the SLIC, and may, for example, be configured as a voltage monitoring circuit for monitoring the tip/ring voltage together with a microprocessor to make appropriate communication with the secondary device 114 based on results from the voltage monitoring circuit. Other various configurations for a connectivity monitor will be known to those skilled in the art.

A secondary device 114-1 is coupled in parallel with the input/output port of the primary service gateway 102-1, e.g. utilizing the existing customerpremises network wiring 122. The secondary device 114-1 may include its own power source 116 and its own SLIC 118, which may perform the function performed by the SLIC 104 in the gateway 102-1. The power source 116 may be any type of stand-alone power source such as a battery, solar cell, or fuel cell. Those skilled in the art will also recognize that some power sources such as a battery may be connected to a typical 120 volt AC power outlet to provide a charging mechanism for the battery. The SLIC 118 may be used to provide tip/ring voltage in the event that the primary service gateway path to the PSTN 110 is out of service.

Those skilled in the art will recognize that only minimal additional wiring, i.e. between the secondary device 114-1 and the gateway 102-1, is required for establishing the parallel connection therebetween. The wiring from the gateway to the CPE 126 need not be modified to install the lifeline backup. In addition, the secondary device 114-1 may be physically located in an optimal position to provide a wireless connection to the network 120 irrespective of the physical location of the primary service gateway.

In a manner to be described in greater detail below, when connectivity between the PSTN and the primary service gateway 102-1 is lost, the secondary device 114-1 may facilitate communication between the CPE and the PSTN through an air interface 126 with the wireless network 120, e.g. a cellular/personal communications services (PCS) network. Communication over the air interface 126 may be established through any cellular or wireless system utilizing air interfaces, such as GSM, TDMA, CDMA or FDMA. The principles of the present invention may also be utilized in hybrid systems that are combinations of two or more of the above air interfaces.

The PSTN 110 may be in communication with the wireless network 120 via a conventional communication protocol 124. The communication protocol 124 may, for example, be a conventional Signal System Number 7 (SS7) protocol which is a family of signaling protocols used to set-up, manage, and tear-down connections. Different types of SS7 protocols include Broadband ISDN User's Part (BISUP), Message Transfer Part (MTP), Signaling Connection and Control Part (SCCP), and Transaction Capabilities Applications Part (TCAP).

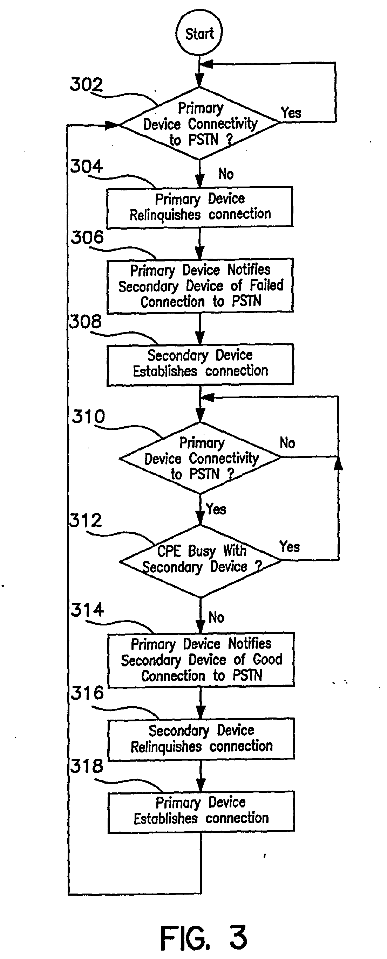

Detailed operation of a system consistent with the invention will be described below in connection with FIG. 3. In general, and with respect to FIG. 1, when the primary service gateway 102-1 loses its connection with the PSTN, the gateway sends a signal to enable the SLIC 118 of the secondary device 114-1, which provides tip/ring voltage for the CPE. The secondary device establishes communication with the PSTN through the air interface 126 and the wireless network 120. Once connectivity between the primary device/gateway and the PSTN is reestablished, the secondary device is disabled, and the primary device reassumes communication with the PSTN through the broadband network.

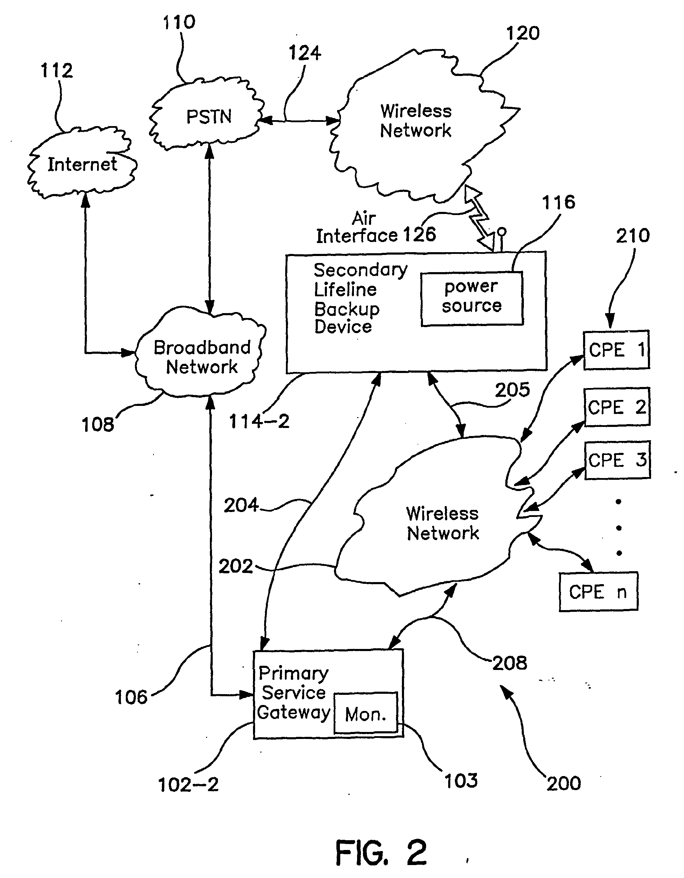

Turning now to FIG. 2, there is illustrated another exemplary embodiment 200 of a system consistent with the invention. As in the embodiment illustrated in FIG. 1, a primary service gateway 102-2 facilitates communication between customer premises equipment (CPE) 210 and a PSTN 110, and optionally other networks such as the Internet 112, through a broadband network 108. In the embodiment of FIG. 2, however, the primary service gateway 102-2 is configured for wireless communication with the secondary device 114-2, and also for wireless communication with the CPE 210 through a customer premises wireless network 202. Wireless communication between the primary device 102-2, the secondary device 114-2, the wireless network 202 and the CPE 210, may be established in a variety of ways known to those skilled in the art, e.g. by radio waves, optical signals, etc, and may utilize air interfaces, such as GSM, TDMA, CDMA, FDMA, DECT, or Bluetooth, a hybrid of such standards, or any other standard.

The CPE 210 in the illustrated embodiment may thus include wireless devices, such as a mobile terminal. The term "mobile terminal" as used herein, may include a cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a positioning receiver, such as a GPS receiver; and a conventional laptop and/or palmtop receiver or other appliance that includes a radiotelephone transceiver.

As is known, wireless devices such as the CPE 210 are typically subscribed to a base station to prevent unauthorized use. In the second embodiment illustrated in FIG. 2, the secondary device 114-2 and the CPE may both be subscribed to the primary service gateway 102-2. Thus, the primary service gateway 102-2 may exchange information with the secondary device 114-2 regarding other subscribed terminals, such as various CPE 210, and system parameters, e.g., system ID. The primary service gateway may further update the secondary device in case of change in the system, such as a subscription or de-subscription of terminals.

in general, operation of the embodiment illustrated in FIG. 2 is similar to that described above with respect to FIG. 1. Normally, the primary device facilitates communication between the CPE and the PSTN over the broadband network 108 by communication with the CPE via the wireless network 202 and a wireless interface 208. If, however, the primary service gateway determines that it does not have proper connectivity to the PSTN 110, it may send a status notification signal over wireless interface 204 to the secondary device 114-2 indicating the same. An exemplary status notification signal may be a beacon that is on when the primary service gateway has proper connectivity to the PSTN and off when it does not have proper connectivity.

The secondary device 114-2 may detect the status notification signal indicating failed connectivity from the primary service gateway, e.g., a missing beacon, and then may become the master of wireless network 202 via wireless interface 205. The secondary device establishes communication between the CPE 210 and the PSTN via wireless interface 205, air interface 126, and the wireless network 120. The secondary device thus provides lifeline backup to maintain connectivity between the CPE and the PSTN despite connectivity problems with the primary service gateway path.

The secondary device may continue to transmit until the primary service gateway indicates, via a second message, that it is ready to provide connectivity to the PSTN. In this instance, the primary service gateway may connect to the secondary device as a slave. The secondary device may continue to operate if a CPE 210 is in use. If a CPE 210 is not in use, the primary service gateway may connect to the secondary device as a master. The next time a CPE is utilized for communication it will be over the primary service gateway to PSTN path.

Detailed aspects of an exemplary operational flow for a system consistent with the invention are illustrated in FIG. 3. As shown, the connectivity monitor 103 in the voice enabled primary service gateway 102-1, 102-2 may continuously monitor 302 the viability of the connection between the gateway and the PSTN 110. As long this connection is maintained, the primary service gateway facilitates communication between the CPE and the PSTN through the broadband network 108. When connectivity is lost, e.g. due to a power failure, disconnection of the communication medium 106, etc., the connectivity monitor in the primary service gateway may sense the connectivity problem with the PSTN and relinquish its connection 304 to the CPE, e.g. by disabling its SLIC 104 or connecting to the secondary device as a slave.

The primary device/gateway may then notify 306 the secondary device 114-1, 114-2 that it can no longer communicate with the PSTN 110. This notification may be continuously or periodically sent until the communication between the primary device and the PSTN is reestablished. Notification may occur by any suitable communication method. In the exemplary embodiment of FIG. 1., for example, the notification, may be made via a signal, e.g. a 10 kHz tone, sent on the existing customer premises network wiring system 122. In the exemplary embodiment of FIG. 2, the notification may be sent via the wireless interface 204.

In response to the notification from the primary device, the secondary device may establish connection 308 with the CPE, e.g. by enabling its internal SLIC 118 or connecting as a master to the primary device and the CPE. In this state, the secondary device provides lifeline backup by facilitating communication between the CPE and the PSTN via the air interface 126 and the wireless network 120. The secondary device may continue to communicate with the CPE while connectivity between the primary device and the PSTN is disabled.

When the notification from the primary service gateway indicates that the connectivity between the primary device and the PSTN has been reestablished 310, a determination 312 may be made as to whether the secondary device is in the process of handling communication (e.g., a telephone call) from the CPE. Once all communication from the CPE through the secondary device is complete, the primary device may acknowledge 314 that its connection with the PSTN is reestablished and the secondary device may relinquish its connection 316 to the CPE. The primary service gateway may then re-establish its connection 318 to the CPE, e.g. after it receives a relinquish response from the secondary device, to reestablish communication between the CPE and the PSTN through the broadband network 108.

The embodiments that have been described herein, however, are but some of the several which utilize this invention and are set forth here by way of illustration but not of limitation. It is obvious that many other embodiments, which will be readily apparent to those skilled in the art, may be made without departing materially from the spirit and scope of the invention.

## Claims

1. A communication system comprising:
a primary service gateway in communication with customer premise equipment (CPE) through a customer premises network, said gateway being configured to establish communication between said CPE and a public service telephone network (PSTN) through a broadband network; and
a secondary device in communication with said CPE through said customer premises network, said secondary device being configured to establish communication between said CPE and said PSTN through a wireless communication network when connectivity between said CPE and said PSTN through said broadband network is disrupted.

2. A communication system according to claim 1, wherein said secondary device is in communication with said primary service gateway and is configured to establish communication between said CPE and said PSTN through said wireless/communication network in response to a notification signal from said primary service gateway indicating that connectivity between said CPE and said PSTN through said broadband network is disrupted.

3. A communication system according to claim 1, wherein said secondary device is in communication with said primary service gateway through said customer premises network.

4. A communication system according to claim 1, wherein said secondary device is in communication with said primary service gateway through a wireless interface.

5. A communication system according to claim 1, wherein said customer premises network comprises a wired network, and wherein said secondary device is connected in parallel with said primary service gateway.

6. A communication system according to claim 5, wherein said secondary device comprises an internal power supply for providing tip/ring voltage to said CPE when connectivity between said CPE and said PSTN through said broadband network is disrupted.

7. A communication system according to claim 1, wherein said customer premises network comprises a customer premises wireless network.

8. A communication system according to claim 7, wherein said secondary device is a slave to said primary service gateway when connectivity between said CPE and said PSTN through said broadband network is established.

9. A communication system according to claim 7, wherein said secondary device is a master to said primary service gateway when connectivity between said CPE and said PSTN through said broadband network is disrupted.

10. A communication system according to claim 7, wherein said customer premises wireless network is a cellular network.

11. A communication system according to claim 1, wherein said CPE comprises at least one telephone.

12. A communication system according to claim 1, wherein said CPE comprises at least one mobile terminal.

13. A communication system according to claim 1, wherein, said broadband network comprises a network selected from the group consisting of: a cable broadband network, and a digital subscriber line (DSL) broadband network.

14. A communication system according to claim 1, wherein said primary service gateway comprises a device selected from the group consisting of: a cable modem, and a digital subscriber line (DSL) modem.

15. A communication system according to claim 1, wherein said wireless communication network comprises a network selected from the group consisting of: a cellular network, and a PCS network.

16. A communication system according to claim 1, wherein said secondary device is configured to communicate with said wireless communication network using a standard selected from the group consisting of: GSM, TDMA, CDMA, and FDMA.

17. A method of connecting a secondary device for providing lifeline backup service in a communication system wherein a primary service gateway is in communication with customer premise equipment (CPE) through a customer premises network and is configured to establish communication between said CPE and a public service telephone network (PSTN) through a broadband network, said method comprising:
placing said secondary device in communication with said CPE through said customer premises network for establishing communication between said CPE and said PSTN through a wireless communication network when connectivity between said CPE and said PSTN through said broadband network is disrupted.

18. A method according to claim 17, said method further comprising placing said secondary device in communication with said primary service gateway for receiving a notification signal from said primary service gateway indicating that connectivity between said CPE and said PSTN through said broadband network is disrupted.

19. A method according to claim 18, wherein said secondary device is placed in communication with said primary service gateway through said customer premises network.

20. A method according to claim 18, wherein said secondary device is placed in communication with said primary service gateway through a wireless interface.

21. A method according to claim 18, wherein said customer premises network comprises a wired network, and wherein said secondary device is placed in communication with said primary service gateway by connecting said secondary device in parallel with said primary service gateway.

22. A method according to claim 17, wherein said secondary device is placed in communication with said CPE for providing tip/ring voltage to said CPE when connectivity between said CPE and said PSTN through said broadband network is disrupted.

23. A method according to claim 17, wherein said customer premises network comprises a customer premises wireless network.

24. A method according to claim 23, wherein said secondary device is placed in communication with said CPE as a slave to said primary service gateway when connectivity between said CPE and said PSTN through said broadband network is established.

25. A method according to claim 23, wherein said secondary device is placed in communication with said CPE as a master to said primary service gateway when connectivity between said CPE and said PSTN through said broadband network is disrupted.

26. A method according to claim 23, wherein said customer premises wireless network is a cellular network.

27. A method according to claim 17, wherein said CPE comprises at least one telephone.

28. A method according to claim 17, wherein said CPE comprises at least one mobile terminal.

29. A method according to claim 17, wherein said broadband network comprises a network selected from the group consisting of: a cable broadband network, and a digital subscriber line (DSL) broadband network.

30. A method according to claim 17, wherein said primary service gateway comprises a device selected from the group consisting of: a cable modem, and a digital subscriber line (DSL) modem.

31. A method according to claim 17, wherein said wireless communication network comprises a network selected from the group consisting of: a cellular network, and a PCS network.

32. A method according to claim 17, wherein said secondary device is configured to communicate with said wireless communication network using a standard selected from the group consisting of: GSM, TDMA, CDMA, and FDMA.

33. A method of switching between a primary service gateway for establishing communication between a public service telephone network (PSTN) and customer premises equipment (CPE) through a broadband network and a secondary device for establishing communication between said PSTN and said CPE through a wireless network to provide lifeline backup for said CPE, said method comprising:
monitoring connectivity status between said PSTN and said CPE through said broadband network;
providing a first notification signal to said secondary device through a customer premises network shared with said primary device when connectivity between said PSTN and said CPE through said broadband network is disrupted; and
enabling said secondary device for establishing communication between said PSTN and said CPE in response to said first notification signal.

34. A method according to claim 33, said method further comprising:
providing a second notification signal to said secondary device through said customer premises network when connectivity b'etween said PSTN and said CPE through said broadband network is established;
disabling said secondary device in response to said second notification signal; and
enabling said primary service gateway for establishing communication between said PSTN and said CPE through said broadband network in response to said second notification signal.

35. The method according to claim 34, wherein said second notification signal is provided only when all communication over said wireless network is complete.

36. A method according to claim 33, wherein said customer premises network is a wired network connecting said secondary device in parallel with said primary service gateway.

37. A method according to claim 33, wherein said customer premises network is a customer premises wireless network.

38. A method according to claim 37, wherein said secondary device is enabled as a master to said primary service gateway when connectivity between said CPE and said PSTN through said broadband network is disrupted.

39. A method according to claim 37, wherein said primary device is enabled as a master to said secondary device when said connectivity between said CPE and said PSTN through said broadband network is established.

40. A method according to claim 37, wherein said customer premises wireless network is a cellular network.

41. A method according to claim 33, wherein said CPE comprises at least one telephone.

42. A method according to claim 33, wherein said CPE comprises at least one mobile terminal.

43. A method according to claim 33, wherein said broadband network comprises a network selected from the group consisting of: a cable broadband network, and a digital subscriber line (DSL) broadband network.

44. A method according to claim 33, wherein said primary service gateway comprises a device selected from the group consisting of: a cable modem, and a digital subscriber line (DSL) modem.

45. A method according to claim 33, wherein said wireless communication network comprises a network selected from the group consisting of: a cellular network, and a PCS network.

46. A method according to claim 33, wherein said secondary device is configured to communicate with said wireless communication network using a standard selected from the group consisting of: GSM, TDMA, CDMA, and FDMA.
